(19) Europäisches Patentamt
European Patent Office
Office européen des brevets

(11) **EP 1 602 921 A1**

(12) **EUROPEAN PATENT APPLICATION**

(43) Date of publication:
**07.12.2005 Bulletin 2005/49**

(51) Int Cl.[7]: **G01N 27/02**, G01N 27/22, C12Q 1/68

(21) Application number: **05253220.7**

(22) Date of filing: **25.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **31.05.2004 KR 2004039231**

(71) Applicant: **SAMSUNG ELECTRONICS CO., LTD.**
**Suwon-si, Gyeonggi-do (KR)**

(72) Inventors:
• **Park Tae-sik**
**Yeongtong-dong, Yeongtong-gu, Suwon-si (KR)**
• **Jung-ho Kang**
**Yeongtong-gu, Suwon-si (KR)**
• **Sung-hee Lee**
**972-2 Yeongtong-dong Yeongtong-gu,Suwon (KR)**
• **Young-il Kim**
**Jangan-gu suwon-si Gyeonggi-do (KR)**
• **Lee, Moon-chul**
**Gwonseon-gu Suwon-si Gyeonggi-do (KR)**
• **Won, Jong-hwa**
**Yeongtong-gu Suwon-si Gyeonggi-do (KR)**

(74) Representative: **Ertl, Nicholas Justin**
**Elkington and Fife LLP,**
**Prospect House,**
**8 Pembroke Road**
**Sevenoaks, Kent TN13 1XR (GB)**

(54) **Apparatus and method for detecting bio molecule using inductance device**

(57)    An apparatus and method for detecting bio molecule using an inductor element that can detect the bonding reaction between a sample and a biochip by measuring the change of the electrical characteristics of a circuit including the inductance device. The method includes forming a signal conversion unit with at least one inductance device, arranging a biochip in a specified area of the signal conversion unit by immobilizing capturing probe biomolecules on a substrate and measuring electric characteristics of the signal conversion unit, performing a bonding reaction between a sample (such as DNA, RNA, protein, biomolecules, etc.) to be analyzed and the biochip, and measuring the electrical characteristics of the signal conversion unit after the reaction bonding. The result of the bio molecule detection is obtained through an electrical signal.

## FIG. 2A

EP 1 602 921 A1

**Description**

## BACKGROUND OF THE INVENTION

The present invention relates to an apparatus and method for detecting a bio molecule using an inductance device, and more particularly to an apparatus and method for detecting a bio molecule using an inductance device that can detect the bio molecule between a sample and a biochip by measuring electrical characteristics of the inductance device before and after hybridization of the sample and a capturing probe.

A biochip is a biological microchip that can analyze a gene expression type, distribution aspect, mutation, etc., by attaching an arrangement of several hundreds to several hundreds of thousands of biomolecules such as DNA, DNA fragments, RNA, etc., the sequences of which are known, at predetermined intervals onto a small solid substrate made of material such as glass, silicone, nylon, etc.

On the surface of a biochip, materials that can serve as a capturing probe for searching for specified hereditary information included in a sample are immobilized. If the sample to be analyzed is reacted on the biochip, the material contained in the sample and the capturing probes immobilized to the surface of the biochip are hybridized, and by detecting and analyzing their hybridization state, information about the material contained in the sample can be simultaneously obtained.

Techniques related to biochips may include a probe attaching and immobilization technique, a signal detection technique, an information processing technique, etc.

The signal detection technique currently used may be classified into a laser induced fluorescence (LIF) detection method, an electrochemical detection method, a mass detection method and a mechanical detection method. The LIF detection method, which is most widely used at present, optically determines whether the probe and the sample are coupled by reaction of the sample and a fluorescent material and reading its result through a fluorescence detection appliance after the coupling reaction between the sample and the capturing probe. However, this method requires a preprocessing reaction for coupling the sample and the fluorescent material before the bonding reaction between the capturing probe and the sample, and this may cause the loss or pollution of the sample. Additionally, an optical readout system for detecting the coupling reaction between the probe and the sample is complicated, and costly measurement equipment is required. Further, it is difficult to miniaturize the optical detection system, and the digitalized output cannot be viewed.

The electrochemical detection method discriminates whether the capturing probe and the sample are coupled together using the degree of an electrochemical reaction, i.e., oxidation-reduction reaction, of another chemical material on the electrode on which the coupling between the capturing probe and the sample has been performed. This method has drawbacks in that its detection capability is relatively degraded in comparison to the fluorescence detection method.

The mass detection method detects the mutual reaction between the capturing probe and the sample through an electrical signal. The representative mass detection method is an electrochemical quartz crystal microbalance (QCM) detection method for measuring the change of frequency vibrations according to the weight of the capturing probe immobilized on crystal that vibrates with a high frequency.

The mechanical detection method uses a minutely assembled cantilever that measures the bonding force among molecules before and after the coupling between the capturing probe and the sample. However, according to this method, the refraction of cantilever beams should be measured quite accurately, and for this, additional equipment such as a laser is necessary.

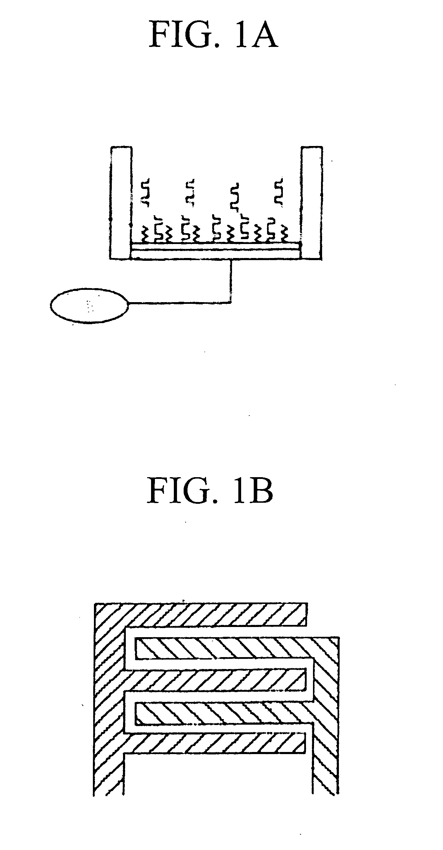

Meanwhile, FIGS. 1A and 1B are views illustrating conventional apparatuses for detecting a bio molecule using a capacitor. Specifically, FIG. 1A illustrates the bio molecule detection apparatus using a capacitor in the form of a trench, and FIG. 1B illustrates the bio molecule detection apparatus using a capacitor in the form of a plane.

In the case of using the characteristic change of the capacitor, it may cause trouble to form a small-sized capacitor. Because the capacitance of the capacitor is in proportion to the area of the capacitor and is in inverse proportion to the thickness of the capacitor, it is very difficult to design a capacitor that can facilitate the biologic process with large area.

The bio bonding detection apparatus using the trench-shaped capacitor as illustrated in FIG. 1A is designed to reduce its thickness and to widen its area by deeply forming a trench, but has drawbacks in that its gap between metals is actually too small to perform a biologic process.

The bio molecule detection apparatus using a comb-shaped capacitor formed on a plane as illustrated in FIG. 1B has a very thin metal layer to make it possible to form a small-sized capacitor, but has drawbacks in that its bio molecule detection sensitivity is not good in practice.

## SUMMARY OF THE INVENTION

According to the invention, there is provided an apparatus for detecting a bio molecule using an inductance device, according to the present invention, which comprises a signal conversion unit formed with at least one inductor element, a biochip arranged in a specified area of the signal conversion unit, an input port, connected to one end part of the signal conversion unit, for inputting a signal for measuring electrical characteristics of the signal conversion unit, an output port, connected to the other end part of the signal conversion unit, for outputting a signal of the signal conversion unit, and a feature amount detection unit, connected to the output port, for measuring the electrical characteristics of the signal conversion unit.

The signal conversion unit may use an element having a parasitically produced inductor component in addition to the inductance device.

The invention also provides a method for detecting bio molecule using an inductor element, which comprises the steps of forming a signal conversion unit with at least one inductance device, arranging a biochip in a specified area of the signal conversion unit by immobilizing capturing probe biomolecules on a substrate and measuring electrical characteristics of the signal conversion unit, performing a bonding reaction between a sample (such as DNA, RNA, protein, biomolecules, etc.) to be analyzed and the biochip, and measuring the electrical characteristics of the signal conversion unit after the reaction bonding.

The method for detecting bio bonding according to the present invention may further comprise the step of removing the biomolecules of the sample that have not coupled with the biochip and the surplus biomolecules among the biomolecules of the sample being coupled with the biochip after the coupling of the sample and the biochip is performed.

The method for detecting bio bonding according to the present invention may further comprise the step of judging that the bonding reaction has been performed if there is a change of the electrical characteristics before and after the coupling between the sample and the biochip.

The specified area of the signal conversion unit in which the biochip is arranged may be any one of an area between windings of the inductance device and an upper area of the inductance device, and the electrical characteristic may by any one of a frequency characteristic, a phase characteristic, an impedance characteristic, a loss characteristic, a current characteristic and a voltage characteristic.

The feature amount detection unit may serve as any one of a frequency characteristic detector, a phase characteristic detector, an impedance characteristic detector, a loss characteristic detector, a current characteristic detector and a voltage characteristic detector.

The invention thus provides an apparatus and method for detecting bio bonding using an inductor element that can obtain a result of bio bonding detection through an electrical signal and thus has an improved detection capability with respect to the bonding reaction without the necessity of a separate preprocessing reaction or separate costly equipment.

## BRIEF DESCRIPTION OF THE DRAWINGS

The above aspects and features of the present invention will be more apparent by describing certain embodiments of the present invention with reference to the accompanying drawings, in which:

FIGS. 1A and 1B are views illustrating conventional apparatuses for detecting a bio molecule using a capacitor.

FIGS. 2A and 2B are sectional views illustrating an apparatus for detecting a bio molecule using an inductance device according to an exemplary embodiment of the present invention;

FIGS. 3A and 3B are views illustrating a signal conversion unit of an apparatus for detecting a bio molecule using an inductance device according to an exemplary embodiment of the present invention;

FIG. 4 is a flowchart illustrating a method for detecting a bio molecule using an inductance device according to an exemplary embodiment of the present invention; and

FIGS. 5A to 5F are views explaining a method for detecting a bio molecule using an inductance device according to an exemplary embodiment of the present invention;

FIG. 6 is a sectional view explaining the change of a dielectric constant of a signal conversion unit before and after the bio coupling; and

FIGS. 7A and 7B are views explaining the characteristic change of an inductance device according to the change of the dielectric constant of the signal conversion unit before and after the bio coupling.

## DETAILED DESCRIPTION

Certain embodiments of the present invention will be described in greater detail with reference to the accompanying drawings.

In the following description, the same drawing reference numerals are used for the same elements even in different drawings. The matters defined in the description such as a detailed construction and elements are only to assist in a comprehensive understanding of the invention. Thus, it is apparent that the present invention can be carried out without those defined matters. Also, well-known functions or constructions are not described in detail since such descriptions would obscure the invention in unnecessary detail.

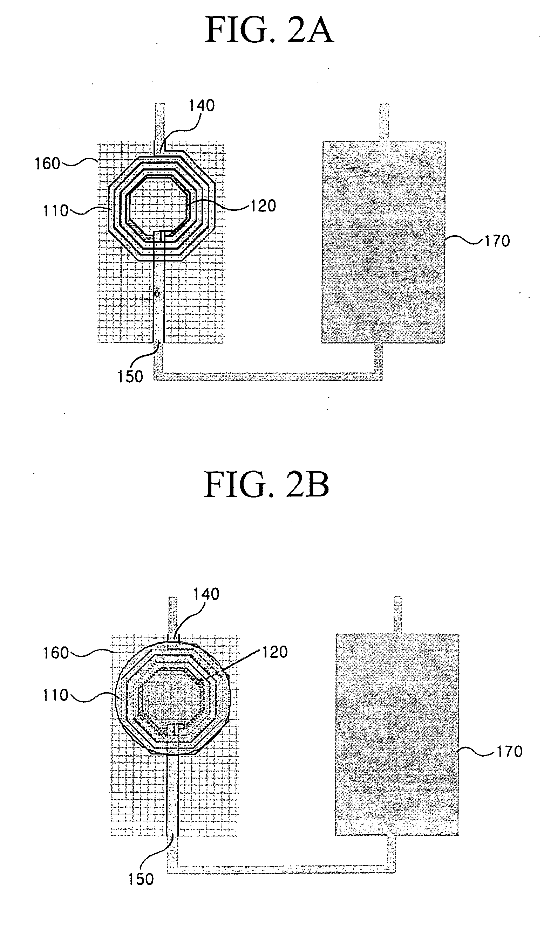

FIGS. 2A and 2B are sectional views illustrating an apparatus for detecting a bio molecule using an inductance device according to an exemplary embodiment of the present invention.

As illustrated in FIGS. 2A and 2B, one inductance device 110 constitutes a signal conversion unit 160. The signal conversion unit 160 can detect the bio molecule according to its electrical characteristics that are changed according to the bio coupling. Here, the electrical characteristics of the signal conversion unit 160 may include one or more of the frequency characteristic, the phase characteristic, the impedance characteristic, the loss characteristic, the current characteristic, the voltage characteristic, etc.

Although the signal conversion unit 160 may be formed by connecting at least one inductance device 110 in series or in parallel, it is formed using only one inductance device 110 as illustrated in FIGS. 2A and 2B in the embodiment of the present invention. This inductance device 110 may be provided in the form of a three-dimensional winding structure as shown in FIGS. 2A and 2B or in the form of a ring or a line.

Additionally, a biochip 120 having capturing probe boimolecules immobilized to a substrate is arranged in the signal conversion unit 160. The biochip 120 may be arranged in at least one of an area between windings of the inductance device 110 and an upper area of the inductance device 110. In FIG. 2A, the biochip 120 is arranged between the windings of the inductance device 110, and in FIG. 2B, the biochip 120 is arranged on an upper part of the inductance device 110.

Meanwhile, an input port 140 is connected to one end part of the inductance device 110 of the signal conversion unit 160, and a signal for measuring electrical characteristics of the signal conversion unit 160 is input to the input port. An output port 150 is connected to the other end part of the inductance device 110 of the signal conversion unit 160 and also to a feature amount detection unit 170. The output port 150 outputs the signal input through the input port, and at least one electrical characteristic such as the frequency characteristic, the phase characteristic, the impedance characteristic, the loss characteristic, the current characteristic, the voltage characteristic, etc., of the signal output through the output port 150 is changed according to the bio coupling between the sample and the biochip 120 arranged in the signal conversion unit 160.

The feature amount detection unit 170 connected to the output port 150 detects electrical characteristics of the signal output from the output port 150. The feature amount detection unit 170 is implemented as any one of a frequency characteristic detector, a phase characteristic detector, an impedance characteristic detector, a loss characteristic detector, a current characteristic detector and a voltage characteristic detector.

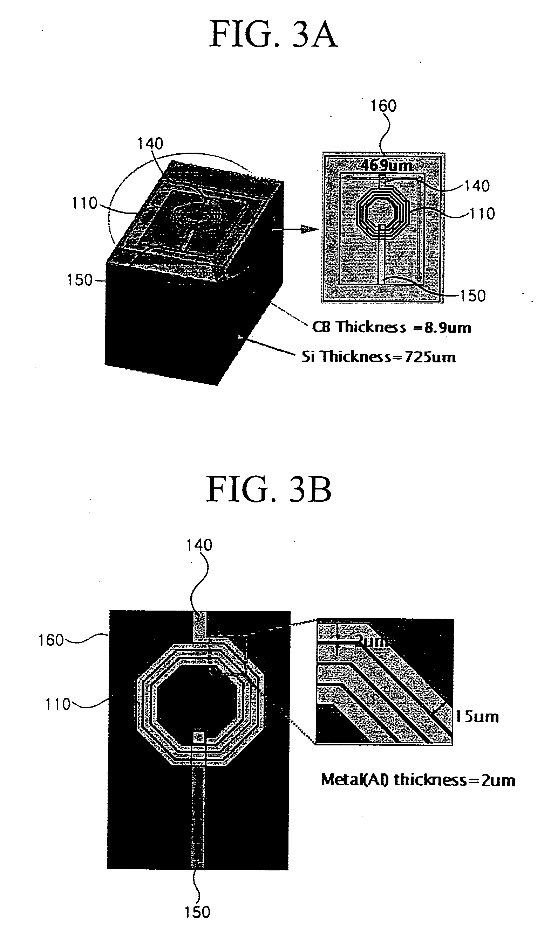

FIGS. 3A and 3B are views illustrating the signal conversion unit of the apparatus for detecting bio molecule using the inductance device according to an embodiment of the present invention.

FIG. 3A illustrates the signal conversion unit 160 formed on an upper part of BCB (benzocyclobutene) having a thickness of 8.9 $\mu$m and a dielectric constant $\varepsilon_r$ of 2.65, which is formed on a silicone (Si) having a thickness of 725 $\mu$m and a dielectric constant $\varepsilon_r$ of 11.9. The width of the signal conversion unit 160 is set to 469 $\mu$m.

In FIG. 3B, the distance between the windings of the inductance device 110 of the signal conversion unit as illustrated in FIG. 3A is set to 2 $\mu$m, the width of the winding is set to 15 $\mu$m, and the thickness of the winding is set to 2 $\mu$m.

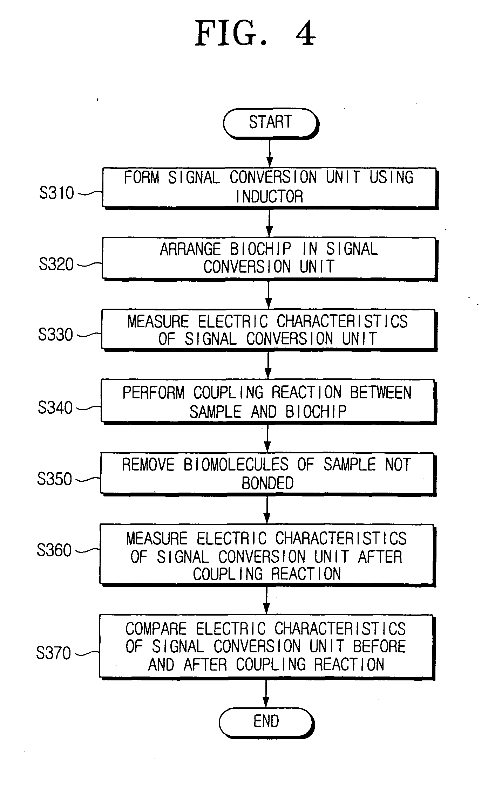

FIG. 4 is a flowchart illustrating the method for detecting bio molecule using the inductance device according to an embodiment of the present invention.

Referring to FIG. 4, the biochip 120 is formed by immobilizing materials that can serve as a capturing probe for searching for specified information included in the sample on the surface of the substrate. Then, the inductance element 110 is formed as the signal conversion unit 160 (step S310). Here, the signal conversion unit 160 is formed through connection of at least one inductance element 110 in series or in parallel.

The biochip is arranged in at least one of the area between the windings of the inductance device 110 of the signal conversion unit 160 and the upper part of the inductance device 110 (step S320).

Then, electrical characteristics of the signal conversion unit 160 in which the biochip 120 is arranged are measured. That is, one or more electrical characteristics such as the frequency characteristic, the phase characteristic, the impedance characteristic, the loss characteristic, the current characteristic, the voltage characteristic, etc., of the signal conversion unit 160 before the bio coupling, i.e., before the sample to be analyzed by the biochip 120 is reacted on the biochip, are measured (step S330). This is for detecting the existence/non-existence and the amount of coupling by comparing the electrical characteristics of the signal conversion unit 160 before and after the bio coupling.

Thereafter, the sample to be analyzed is reacted on the biochip 120 arranged in the signal conversion unit 160 (step S340). If biomolecules having the same form as the biomolecules on the biochip 120 exist in the sample, the bio coupling is performed. Then, the surplus biomolecules among the biomolecules that have reacted on the biomolecules on the biochip 120 and the biomolecules that have not reacted on the biomolecules on the biochip 120 are removed (step S350).

Then, one or more characteristics such as the frequency characteristic, the phase characteristic, the impedance characteristic, the loss characteristic, the current characteristic, the voltage characteristic, etc., of the signal conversion unit 160 after the biomolecules on the biochip 120 and the sample are coupled are measured (step S360).

If the bonding reaction is performed between the biochip 120 and the sample, the electrical characteristics of the signal conversion unit 160 are changed, and thus the existence/non-existence and the amount of coupling are detected by comparing the electrical characteristic values of the signal conversion unit 160 before and after the bonding reaction (step S370).

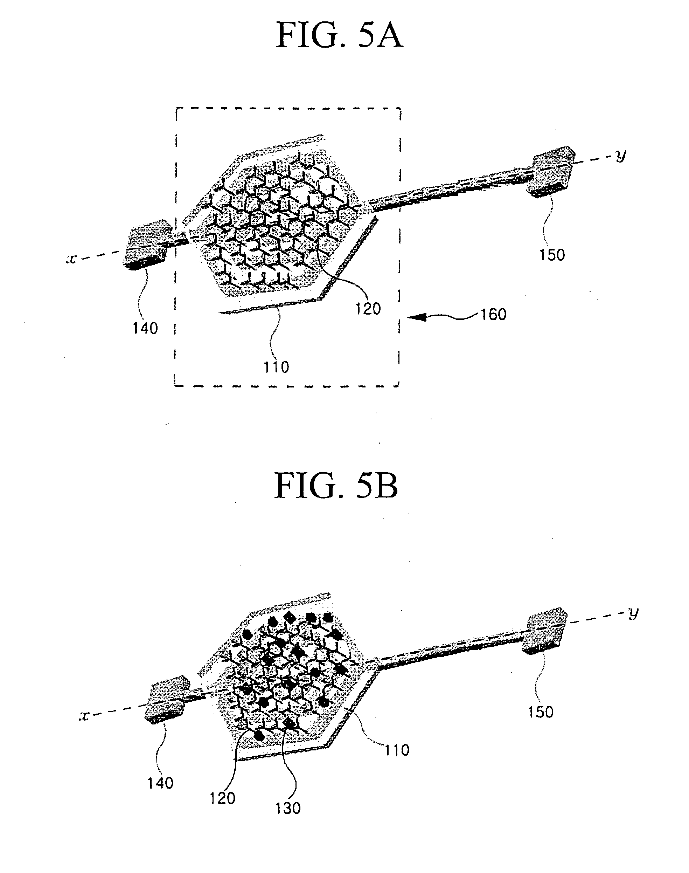

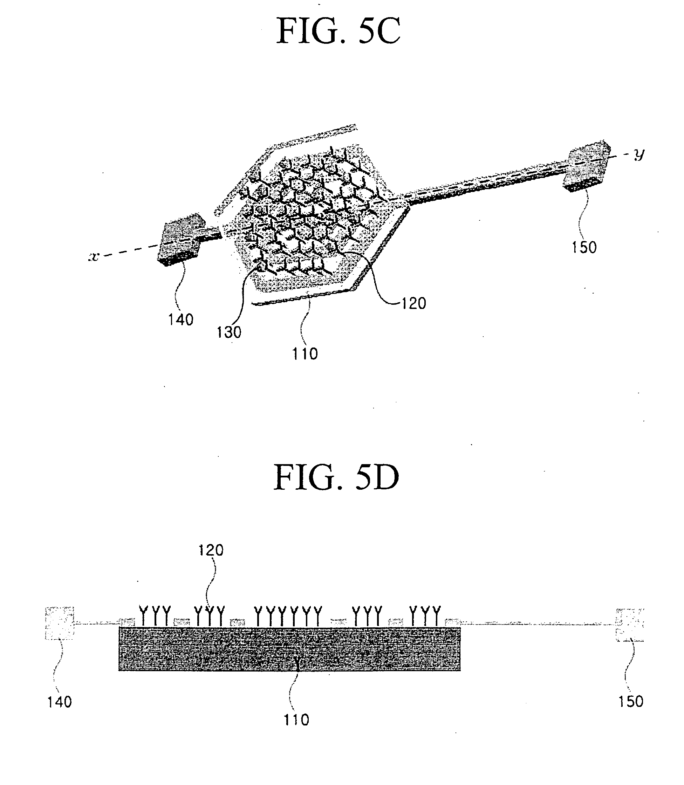

FIGS. 5A to 5F are views explaining the method for detecting bio molecule using the inductance device according to an embodiment of the present invention. Specifically, FIGS. 5A to 5C are perspective views illustrating the method for detecting the bio molecule using the inductance device, and FIGS. 5D to 5F are sectional views taken along the line x-y as illustrated in FIGS. 5A to 5C.

FIGS. 5A and 5D illustrate the signal conversion unit 160 before the bonding reaction. As illustrated in FIGS. 5A and 5D, one inductance device 110 constitutes the signal conversion unit 160, and the biochip 120 is formed between the windings of the inductance device 110. After the biochip 120 is arranged in the signal conversion unit 160, the electrical characteristics of the signal conversion unit 160 before the bio reaction are measured by inputting a high-frequency signal to the input port 140.

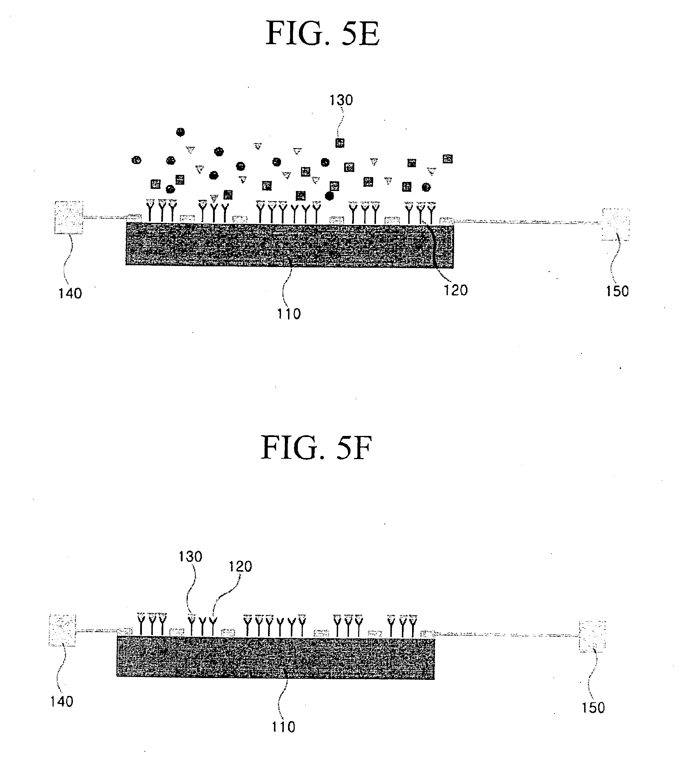

FIGS. 5B and 5E illustrate the signal conversion unit when the bio reaction is performed. As illustrated in FIGS. 5B and 5E, if the biomolecules that can be reacted with the biomolecules immobilized to the biochip 120 exist in the sample 130, the bio coupling is performed.

FIGS. 5C and 5F illustrate the signal conversion unit 160 after the bio reaction. As illustrated in FIGS. 5C and 5F, the biomolecules of the sample 130 that have not coupled with the biochip 120 and the surplus biomolecules among the biomolecules of the sample 130 that have bonded with the biochip 120 are removed. The electrical characteristics of the signal conversion unit 160 are measured by inputting a signal to the input port 140 after the coupling. The existence/non-existence of the bonding reaction is detected by comparing the output values of the output port 150 before and after the bonding reaction is performed.

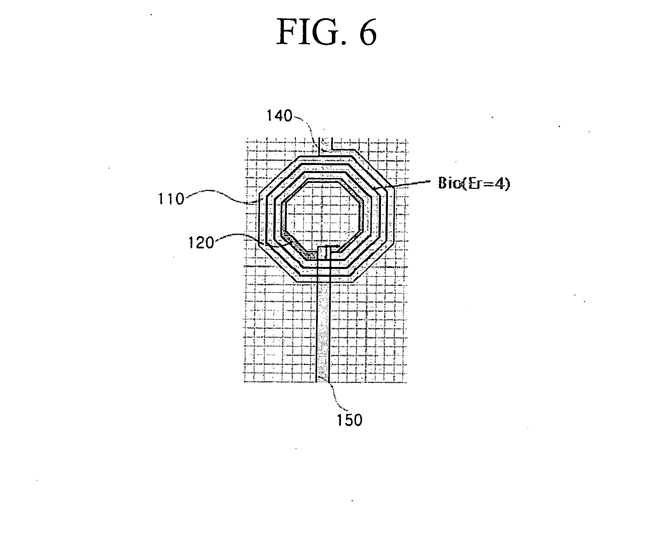

FIG. 6 is a sectional view explaining the change of a dielectric constant of the signal conversion unit before and after the coupling.

Referring to FIG. 6, if it is assumed that the biochip 120 is formed between the windings of the inductance device 110 and the dielectric material between the windings is air, the dielectric constant is changed to four, and thus the difference between the dielectric constants before and after the bonding reaction can be converted into an electrical signal. Additionally, the dielectric constant may be changed according to the kind of the bio sample, and the change of impedance also affects the signal conversion in addition to the change of the dielectric constant of the bio sample.

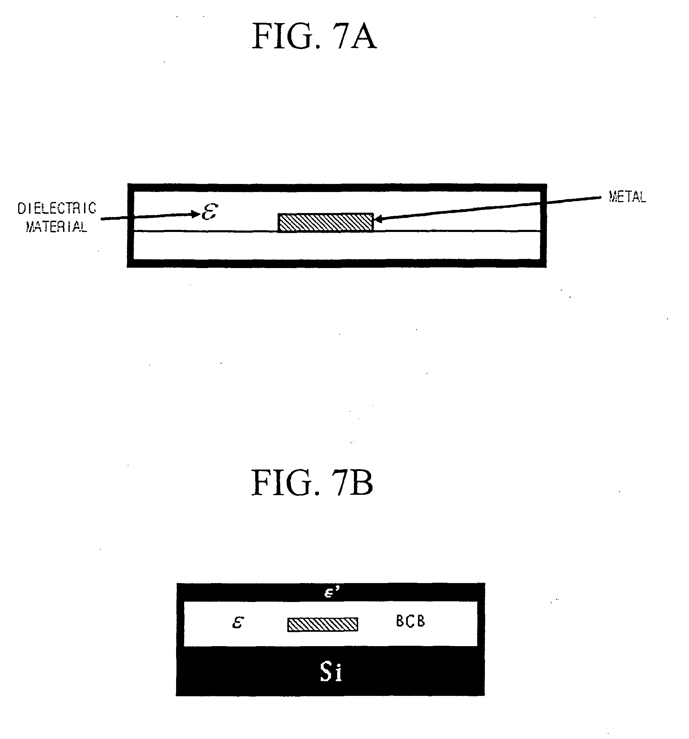

FIGs. 7A and 7B are views explaining the characteristic change of the inductance device according to the change of the dielectric constant of the signal conversion unit before and after the coupling.

FIG. 7A illustrates the change of a wavelength in comparison to a wavelength in free space if a metal thin film exists in the dielectric material. As illustrated in Fig. 7A, if a dielectric material exists around the metal thin film and the dielectric constant is changed, the wavelength is changed to cause the frequency characteristic also to be changed. Such change of the wavelength according to the change of the dielectric constant is expressed by Equation (1)

$$\lambda_g = \frac{\lambda_o}{\sqrt{\varepsilon}} \qquad (1)$$

Here, $\lambda_g$ denotes a guide wavelength, $\lambda_o$ a free space wavelength, and $\varepsilon$ a dielectric constant, respectively.

FIG. 7B illustrates the structure of the inductance device. The change of the dielectric constant of upper and lower layers affects the characteristic change of the inductance device, and particularly, it affects the change of a quality factor (Q) value to change the frequency and input/output characteristics of the inductance device. Particularly, in a high-frequency region, the characteristic change of the inductance device becomes sensitive according to the change of the dielectric constant, and thus the existence/non-existence of the coupling can easily be detected by measuring the characteristics of the inductance device after the coupling.

As described above, according to the present invention, by measuring the electrical characteristics of the circuit constructed using the inductance device before and after the coupling, the result of the coupling detection can be obtained through an electrical signal, and thus the capability of detecting the coupling can be improved in comparison to the conventional apparatus and method.

Additionally, a separate preprocessing reaction is not required before the bonding reaction such as the fluorescent detection, and separate costly equipment is not required as in the mechanical detection method, fluorescent detection method, etc. Accordingly, the time required for detecting the bonding reaction can be shortened in comparison to the conventional apparatus and method.

Further, in the high-frequency region, the characteristic change of the inductance device becomes sensitive according to the change of the dielectric constant, and thus the capability of detecting the coupling can be improved in comparison to the conventional apparatus and method.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

**Claims**

1. An apparatus for detecting a bio molecule using an inductance device, comprising:

a signal conversion unit comprising at least one inductance device;

a biochip arranged in a specified area of the signal conversion unit;

an input port, connected to one end part of the signal conversion unit, configured to input a signal for measuring electrical characteristics of the signal conversion unit;

an output port, connected to the other end part of the signal conversion unit, configured to output a signal of the signal conversion unit; and

a feature amount detection unit configured to receive the signal output from the output port and to measure an electrical characteristic of the signal conversion unit based on the signal output from the output port.

2. The apparatus as claimed in claim 1, wherein the specified area of the signal conversion unit in which the biochip is arranged is any one of an area between windings of the inductance device and an upper area of the inductance device.

3. The apparatus as claimed in claim 1 or 2, wherein the electrical characteristic is any one of a frequency characteristic, a phase characteristic, an impedance characteristic, a loss characteristic, a current characteristic and a voltage characteristic.

4. The apparatus as claimed in any preceding claim, wherein the feature amount detection unit serves as any one of a frequency characteristic detector, a phase characteristic detector, an impedance characteristic detector, a loss characteristic detector, a current characteristic detector and a voltage characteristic detector.

5. A method for detecting a bio molecule using an inductor element, comprising:

providing a signal conversion unit with at least one inductance device;

arranging a biochip in a specified area of the signal conversion unit by immobilizing capturing probe biomolecules on a substrate and measuring an electrical characteristic of the signal conversion unit;

performing a bonding reaction between a sample to be analyzed and the biochip; and

measuring the electrical characteristic of the signal conversion unit after the reaction bonding.

6. The method as claimed in claim 5, further comprising removing the biomolecules of the sample that have not coupled with the biochip and the surplus biomolecules among the biomolecules of the sample being coupled with the biochip after the coupling of the sample and the biochip is performed.

7. The method as claimed in claim 5 or 6, further comprising judging that the bonding reaction has been performed if there is a change of the electrical characteristics before and after the coupling between the sample and the biochip.

8. The method as claimed in claim 5, 6 or 7, wherein the electrical characteristic is any one of a frequency characteristic, a phase characteristic, an impedance characteristic, a loss characteristic, a current characteristic and a voltage characteristic.

9. The method as claimed in any one of claims 5 to 8, wherein the specified area of the signal conversion unit in which the biochip is arranged is any one of an area between windings of the inductance device and an upper area of the inductance device.

10. The method as claimed in any one of claims 5 to 9, wherein the measuring the electrical characteristic of the signal conversion unit measures the electrical characteristic of the signal conversion unit using a feature amount detection unit that serves as any one of a frequency characteristic detector, a phase characteristic detector, an impedance characteristic detector, a current characteristic detector and a voltage characteristic detector.

# FIG. 1A

# FIG. 1B

# FIG. 2A

# FIG. 2B

# FIG. 3A

160

140

469um

140

110

110

150

150

CB Thickness = 8.9um

Si Thickness = 725um

# FIG. 3B

140

160

110

2um

15um

150

Metal(Al) thickness = 2um

# FIG. 4

START

S310 — FORM SIGNAL CONVERSION UNIT USING INDUCTOR

S320 — ARRANGE BIOCHIP IN SIGNAL CONVERSION UNIT

S330 — MEASURE ELECTRIC CHARACTERISTICS OF SIGNAL CONVERSION UNIT

S340 — PERFORM COUPLING REACTION BETWEEN SAMPLE AND BIOCHIP

S350 — REMOVE BIOMOLECULES OF SAMPLE NOT BONDED

S360 — MEASURE ELECTRIC CHARACTERISTICS OF SIGNAL CONVERSION UNIT AFTER COUPLING REACTION

S370 — COMPARE ELECTRIC CHARACTERISTICS OF SIGNAL CONVERSION UNIT BEFORE AND AFTER COUPLING REACTION

END

# FIG. 5A

# FIG. 5B

# FIG. 5C

# FIG. 5D

# FIG. 5E

130

140

110

120

150

# FIG. 5F

130  120

140

110

150

# FIG. 6

# FIG. 7A

DIELECTRIC MATERIAL → $\mathcal{E}$

METAL

# FIG. 7B

$\varepsilon'$

$\varepsilon$    BCB

Si

**European Patent Office**

**EUROPEAN SEARCH REPORT**

Application Number

EP 05 25 3220

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2004/014201 A1 (KIM CHANG-KYUNG ET AL) 22 January 2004 (2004-01-22) * paragraph [0027] - paragraph [0033]; figure 2 * ----- | 1-10 | G01N27/02 G01N27/22 C12Q1/68 |
| X | US 2002/196009 A1 (SEWALD DIETER) 26 December 2002 (2002-12-26) * the whole document * ----- | 1-10 | |
| X | EP 1 143 245 A (F. HOFFMANN-LA ROCHE AG; ROCHE DIAGNOSTICS GMBH) 10 October 2001 (2001-10-10) * column 2, line 14 - column 3, line 50 * ----- | 1-10 | |
| P,X | WO 2004/053491 A (KONINKLIJKE PHILIPS ELECTRONICS N.V; KAHLMAN, JOSEPHUS, A., H., M; PRI) 24 June 2004 (2004-06-24) * page 6, line 21 - page 7, line 16 * ----- | 1-10 | |
| A | US 5 978 694 A (RAPOPORT ET AL) 2 November 1999 (1999-11-02) * column 4, line 55 - column 5, line 4 * ----- | 1-10 | TECHNICAL FIELDS SEARCHED (Int.Cl.7) G01N C12Q |

The present search report has been drawn up for all claims

| Place of search | Date of completion of the search | Examiner |
|---|---|---|
| Munich | 31 August 2005 | Purdie, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 25 3220

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2005

| Patent document cited in search report | | Publication date | Patent family member(s) | | Publication date |
|---|---|---|---|---|---|
| US 2004014201 | A1 | 22-01-2004 | FR | 2842605 A1 | 23-01-2004 |
| | | | JP | 2004053575 A | 19-02-2004 |
| US 2002196009 | A1 | 26-12-2002 | DE | 10002595 A1 | 09-08-2001 |
| | | | WO | 0153818 A2 | 26-07-2001 |
| | | | EP | 1252507 A2 | 30-10-2002 |
| EP 1143245 | A | 10-10-2001 | US | 6858433 B1 | 22-02-2005 |
| | | | CA | 2342042 A1 | 03-10-2001 |
| | | | EP | 1143245 A2 | 10-10-2001 |
| | | | JP | 2001349868 A | 21-12-2001 |
| WO 2004053491 | A | 24-06-2004 | AU | 2003302812 A1 | 30-06-2004 |
| | | | WO | 2004053491 A1 | 24-06-2004 |
| US 5978694 | A | 02-11-1999 | AU | 2869900 A | 25-08-2000 |
| | | | AU | 728256 B2 | 04-01-2001 |
| | | | AU | 6341898 A | 18-09-1998 |
| | | | BR | 9808650 A | 23-05-2000 |
| | | | CA | 2278774 A1 | 03-09-1998 |
| | | | CN | 1249672 A | 05-04-2000 |
| | | | EP | 0964640 A1 | 22-12-1999 |
| | | | JP | 2002510988 T | 09-04-2002 |
| | | | TW | 434412 B | 16-05-2001 |
| | | | WO | 0045697 A1 | 10-08-2000 |
| | | | WO | 9837808 A1 | 03-09-1998 |
| | | | US | 2001011155 A1 | 02-08-2001 |

EPO FORM P0459

For more details about this annex : see Official Journal of the European Patent Office, No. 12/82